# EUROPEAN PATENT SPECIFICATION

(11) **EP 2 595 359 B1**
(45) Date of publication and mention of the grant of the patent: **07.01.2015**
(21) Application number: 11190010.6
(22) Date of filing: 21.11.2011
(51) Int. Cl.: H04L 29/08

(54) **Low Latency Referrer Free Requests**
Referrer - freie Anfragen mit geringer Latenz
Requêtes sans indicateur de faible latence

(43) Date of publication of application: 22.05.2013
(73) Proprietor: Google Inc., Mountain View, CA 94043 (US)
(72) Inventor: Lucash, Nathan Peter, San Francisco, CA California 94110 (US)
(74) Representative: Schley, Jan Malte

(56) References cited:
- WO-A2-2005/001660
- US-A1- 2008 034 417
- US-A1- 2010 251 144
- Jankokutou: "Google Referrer Anonymizer", , 9 January 2011 (2011-01-09), XP002670527, Retrieved from the Internet: URL:http://userscripts.org/scripts/review/ 93083 [retrieved on 2012-02-29]

## Description

### TECHNICAL FIELD

This specification relates to providing web traffic data within a computer network and particularly to technologies relating to reducing the latency of a web beacon request within a computer network.

### BACKGROUND

A resource request, such as a Hypertext Transfer Protocol (HTTP) request, includes header fields that include data for the request. One such header field is a referrer field. In the context of HTTP, the referrer field includes an HTTP referrer (also known as an "HTTP referrer"). The HTTP referrer includes the address, e.g., the Uniform Resource Locator (URL), of the resource from which the request originated. Thus the receiving website of the HTTP request can determine the last page a user was on when the user clicked the link that generated the HTTP request. Websites can use referrer logging to identify where users are visiting from, to perform security operations, and for other operations.

However, there are situations in which parties do not want to provide referrer information for requests. One such situation is the reporting of web beacons. A publisher may provide web traffic data to a third party service that provides the service of collecting and aggregating web traffic data for publishers. A publisher may be understood to be anybody or any entity publishing content on the web. The particular web traffic data that is provided can be specified by the publisher and also by the third party service, and is used for a variety of applications. For example, the third party service may be an advertising service, and may collect demographic information of subscribers to the publisher so that the publisher can implement demographic advertising targeting. Alternatively, the third party service may be a data aggregator that purchases particular information from the publisher.

A common technique to collect the data for publishers is to employ the use of web beacons, e.g., pixel requests to a server of the third party. A web beacon generates an HTTP request from a browser to the third party server for tracking, reporting and data gathering purposes by the third party server. The request includes information specified by the publisher and/or by the third party service, such as the client device IP address, cookies from the third party service, parameters in the URL, etc.

It is sometimes desirable to remove some contextual information from the HTTP request notably, the referrer header. This is often done to protect the privacy of the client device users, to preclude the third party service from obtaining specific URL information that the publisher does not want to disclose, or for other reasons. The HTTP referrer identifies the address of the web page, e.g., the uniform resource locator of the web page. When an HTTP request is sent in response to the activation or execution of an instruction in a particular web page, the HTTP request includes a referrer header that specifies the URL of the web page.

One technique that is used to strip referrer headers from HTTP requests involves loading an intermediate file that redirects a browser on the user device to the final destination. In this way, the referrer header is set to the intermediate file's URL, or removed from the HTTP header entirely, depending on the specific implementation. This technique, however, imposes latency on the system in that two round-trip resource fetches must occur. Accordingly, stripping the referrer header from a web beacon results in an increased latency in an overall response time to the beacon. In addition, related costs for the two round-trip resource fetches might be imposed on the user.

The Document US 2010/0251144 ("Third-Party-Secured Zones on Web Pages") discloses a method performed by a client device defining a first and second content item environments for a resource served by a first server to the client device, the first content item belonging to a first domain of the first server and the second content item being a secure content item environment ("secure zone").

Document US 2008/0034417 ("Systems and Methods for using an HTTP aware client agent") discloses a client agent operating in a virtual private network environment to intercept HTTP communictions. For security purposes this client agent can modify, add or remove a value following a "referrer" HTTP message header.

An object of the application is to provide a possibility to reduce the latency in an overall response time to the beacon.

### SUMMARY

The object is archived according to the present application by the subject-matters of the independent claims. Further embodiments are described in the dependent claims. The present application may provide the advantage of being able to work with a single request instead of two round-trip resource fetches. This helps to reduce latency time and costs. Thus, this specification describes technologies relating to reducing the latency of a resource request.

In general, one innovative aspect of the subject matter described in this specification can be embodied in methods that include the actions of defining first and second content item environments for a resource served by a first server to the client device, the first content item environment belonging to a first domain of the first server, the second content item environment being an anonymous content item environment, the anonymous content item environment being a content item environment for which a content item request has an anonymized referrer; rendering content in the first content item environment for display on the client device; generating for the second content item environment a content item request, the content item request being a request for a respective content item and having an anonymized referrer; and transmitting the content item request. Other embodiments of this aspect include corresponding systems, apparatus, and computer programs, configured to perform the actions of the methods, encoded on computer storage devices.

These and other embodiments can each optionally include one or more of the following features. The second content item environment can belong to the first domain of the first server, and the content item request for the respective content item can be a request to a second server that belongs to a second domain that is different from the first domain. The second content item environment can be an iFrame that includes instructions that cause the client device to generate the content item request. The iFrame can be a child of the first content item environment that the same domain as the first content item environment. The second content item environment can be an iFrame with null value for a uniform resource locator (URL) for the iFrame. The content item request can be an image request. The predefined data items include first data items specified by the first server and second data items specified by the second server. The second data items can include cookie data of a cookie set for the second domain. The content item request can be an HTTP request with a blank HTTP referrer field.

Particular embodiments of the subject matter described in this specification can be implemented so as to realize one or more of the following advantages. The need for intermediate servers and/or files to strip out referrer data is eliminated, thereby simplifying system architecture. Because the web beacon, when generated in the first instance, does not include referrer data, the beacon can be sent directly to the data collection sever without an intermediate addressee, thereby reducing overall system latency. The reduction in latency also leads to a better user experience.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

Fig. 1 is a block diagram of an example environment in which a web beacon is used to collect traffic information.
Fig. 2 is a block diagram illustrating a process flow between a publisher server, a client device, and a content item server.
Fig. 3 is a flow diagram of an example process for generating a web beacon that does not include the address of a parent resource in a referrer header.
Fig. 4 is a flow diagram of an example process for generating a resource request having an anonymized referrer.
Fig. 5 is a block diagram of a programmable processing system.

Like reference numbers and designations in the various drawings indicate like elements.

### DETAILED DESCRIPTION

### Overview

The subject matter of this specification solves the technical problem of reducing or eliminating the increased latency that typically results in intermediate redirects that remove the referrer header from a resource request. In some implementations, a client device creates an anonymous content item environment for a web page received from a publisher server. As used in this specification, an anonymous content item environment is a content item environment for which a content item request has an anonymized referrer. For example, an iFrame that is created without a URL, e.g., the URL of the iFrame is blank, or includes only a null value, such as a blank value, a "0" or some other value that is determined to be a null or anonymous value, is an anonymous content item environment. The term iFrame is used as synonym for the term inline frame. An inline frame might be used to place another HTML document in a frame.

The anonymous content item environment is populated with instructions, or is associated with the execution of instructions, that cause the user device to issue a content item request. For example, the content item request can be a request for a pixel that is sent to a data collection server that is different from the publisher server. The content item request includes one or more predefined data items in addition to the request. For example, the user device populates the iFrame with instructions to render a pixel, which causes the user device to generate an HTTP request to the third party server for the pixel. The iFrame is anonymous, which means it does not have a URL (e.g., the URL is blank, or some other null value, e.g., "0"). The request can optionally include tracking information that is specified by the publisher server and/or by the third party server, but does not include referrer data that indicates the URL of the parent web page of the iFrame. In this fashion, the required tracking information is sent directly to the third party server, but the referrer header is blank, as the information in the referrer header is the null value of the anonymous iFrame.

### Example Environment

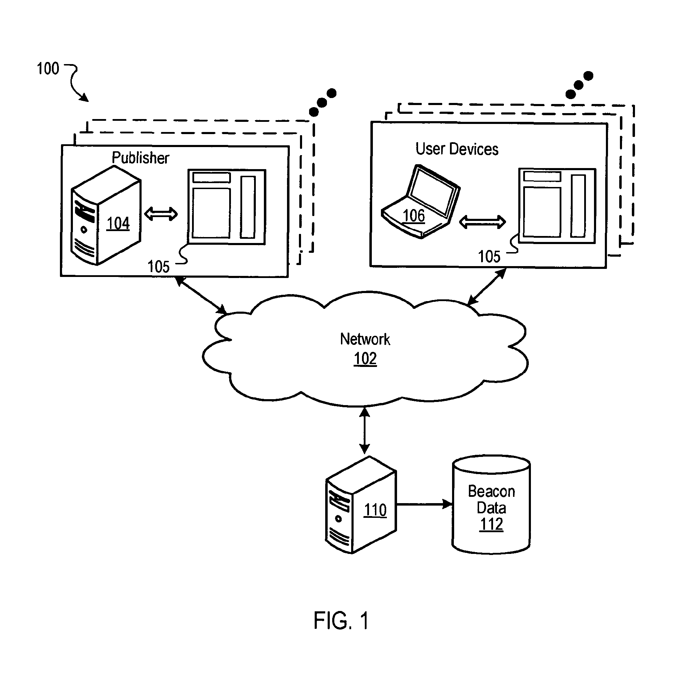

Fig. 1 is a block diagram of an example environment 100 in which a web beacon is used to collect traffic information. A computer network 102, such the Internet, or a combination of the Internet and one or more wired and wireless networks, connects publishers 104, user devices 106 (e.g., client devices), and data collection server 110. Only one representative entity is respectively shown for the publisher 104 and user device 106; however, the online environment 100 connects many thousands of publishers and user devices, as indicated by the phantom figures behind the publisher 104 and user devices 106.

The user device 106 is an electronic device that is under control of a user and is capable of requesting and receiving resources 105 over the network 102. Example user devices 106 include personal computers, mobile communication devices and other devices that can send and receive data over the network 102. A user device 106 typically includes a user application, such as a web browser or other communication software, to facilitate the sending and receiving of data over the network 102.

Each publisher 104 maintains a website. Each website is one or more resource 105 associated with a domain name, and each is hosted by one or more servers. A resource is any data that can be provided by the web site over the network 102 and that is associated with a resource address. Resources include HTML pages, RSS feeds, and video, for example. To avoid congestion in the drawings, the resources 105 are represented as web pages; however, the representations of Fig. 1 are inclusive of all types of resources that are consistent with the above definition.

The data collection server 110 is managed by a third party service that collects data that is provided by the use of web beacons. The server 110 is in communication with a data storage system that stores beacon data 112. The beacon data 112 include data provided through web beacons sent from user devices 106. The particular data items included in the beacon data 112 depend on the particular publisher 104 and the arrangement the publisher has with the third party service. For example, a first publisher 104 may only desire that the demographic data of age and gender of its users be reported, and thus the web beacons that are generated in response to web pages served by the first publisher include age and gender data. Conversely, a second publisher 104 may desire that an agent type of the browsers the users are using be reported, and thus the web beacons that are generated in response to web pages served by the second publisher include agent identifiers.

The web beacons may also include additional second data items that are specific to the third party service. For example, the data collection server 110 may belong to a domain that is different from the domain of the publisher servers, and sets a cookie at each user device 106. The cookie may include a random number that can be used to reconcile web beacons to a particular user device, and the random number can be included with the web beacon.

The beacon data 112 are used for a variety of purposes. For example, the third party service may be an advertising service or a data aggregator, as described above. The third party service may also provide other services that are facilitated by the reporting of beacon data through web beacons.

### Processing Of Content Item Requests

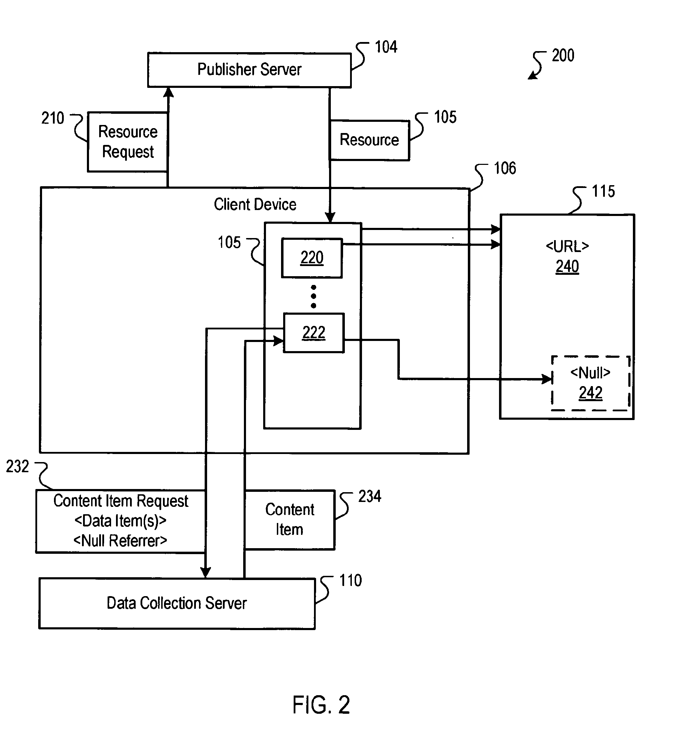

A more detailed description of the processing of content item requests is described with reference to Fig. 2, which is a block diagram illustrating a process flow between a publisher server 104, a client device 106, and the data collection server 110.

In operation, the client device 106 sends a resource request 210 to a first server of the publisher 104. The resource request 210 is a request for a resource, such as a web page. In response, the publisher server 104 serves the resource 105 to the client device 106. The resource includes instructions that the client device 106 executes to perform operations. An example resource is a web page, and examples of such instructions include markup language (e.g., XML, HTML, etc.), scripts, applets, and the like.

The instructions includes instructions 220 and 222 that cause the client device 106 to respectively define first and second content item environments 240 and 242 for the resource 105 served by the publisher server 104 to the client device 105. In some implementations, the first and second content item environments 240 and 242 belong to a first domain of the publisher server 104, e.g., a domain of the publisher. The second content item environment 242 is instantiated as an anonymous content item environment. As defined above, an anonymous content item environment is content item environment for which a content item request has an anonymized referrer, e.g., the referrer field is blank, or includes some null referrer data.

For example, the first content item environment 220 may be the environment of the browser window 240 that is used to render the content of the resource for display, and that is associated with the URL of the resource 105. The second content item environment may be an invisible friendly iFrame that is of the same origin of the parent resource 105, i.e., the iFrame is a child of the first content item environment 240 and is associated with the same domain as the resource 105. However, the second content item environment 242 does not include a resource address, e.g., the iFrame URL is blank or has only a null value for the URL.

In some example implementations, the instructions 222 create an iFrame element without setting the URL of the iFrame element, and append the iFrame element to the resource, e.g.,

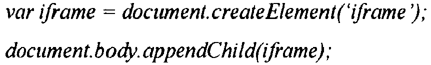

Usually the domain of the iFrame is the same as that of the parent document to comply with cross-site scripting restrictions. However, the domains need not be the same if the operating environment allows for access to the iFrame and execution of instructions within the iFrame if the domains are not identical.

In some implementations, the domain of the iFrame may be set to a domain that is different from the domain of the parent page to prevent the sharing of the URL of the parent page from a request from the iFrame. For example, if the domain data of the parent page is "www.example.com", then the domain of the iFrame may be set to "example, com." Cross frame communications are allowed when the domain data matches exactly. Thus, by modifying the domain of the parent page to be a more general version of itself in the iFrame (or setting the iFrame to an entirely different domain), cross-frame communication is prevented.

The client device 106, executing the instructions for the resource 105, populates the second content item environment 242 with instructions that cause a content item request 232 associated with the second content item environment 242 to be sent to the data collection server 110. For example, the instructions 222 may invoke, from within the content item environment 242, a request for a single pixel from the data collection server 110. The request 232 requests the respective content item from the second server and may optionally include one or more predefined data items in addition to the pixel request. For example, if the requests 232 are merely to facilitate counts, then no additional data items need be sent. However, if the requests 232 are to facility the aggregation of other information, then additional data items are sent for the other information.

The data items are specified by the publisher 104 and/or by the data collection server 110. The particular data items that are specified depends on the arrangement between the publisher and the third party service. For example, the data items may include data that the publisher specifies and provides, such as demographic information of a user, and cookie data for a cookie set to the domain of the data collection server. The data items can be passed, for example, as query parameters in the content item request 232.

In some example implementations, the instructions 222 populate the anonymous content item environment (e.g., the iFrame) with an image located at a URL hosted by the data collection server 110. Appended to the URL are query parameters that include the data items to be stored in the beacon data 112. For example, assume the data that are to be collected are age and gender, and the particular image is p123.gif. The URL and query parameters that include the data items of age and gender are:

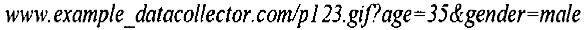

Additional data items are included, as illustrated by the age and gender query parameters. To generate the web beacon, a reference to the image p123.gif at the URL with the query parameters is written in the iFrame. The resulting HTTP request has an anonymized referrer, i.e., the referrer field has data (or lack of data) that indicates a non-existent referrer. For example, as the iFrame was not set to a URL, it has no value in the URL field (i.e., a blank field). Alternatively, the iFrame may have its URL set to some other null value that is interpreted as a non-existent referrer, e.g., "0", "http://null/", a blank value, etc.

In response to receiving the content item request 232, the data collection server 110 stores the data included in the request in the beacon data 112, and provides the requested content item 234 (e.g., an invisible pixel) to the client device 106.

In other implementations, any request for a resource can be anonymized by instantiating an anonymous content item environment and generating the resource request for the content item environment. For example, in the context of HTTP, a link can be associated with a script that creates an anonymous iFrame when the link is selected. The window handler for the anonymous iFrame is then used to execute a command that generates a request for the URL. For example, a URL link may be encoded as follows:

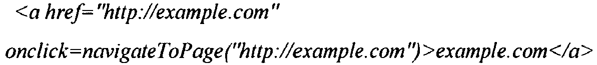

Selection of the link invokes the navigateToPage function that passes the URL http://example.com as a parameter to a script with the following instructions:

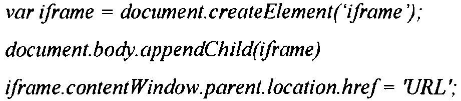

The last instruction causes the request for the passed URL parameter (in this case, http://example.com) to be generated for the iFrame. As the iFrame has not had its URL set, the referrer field in the request will be blank.

### Example Process Flows

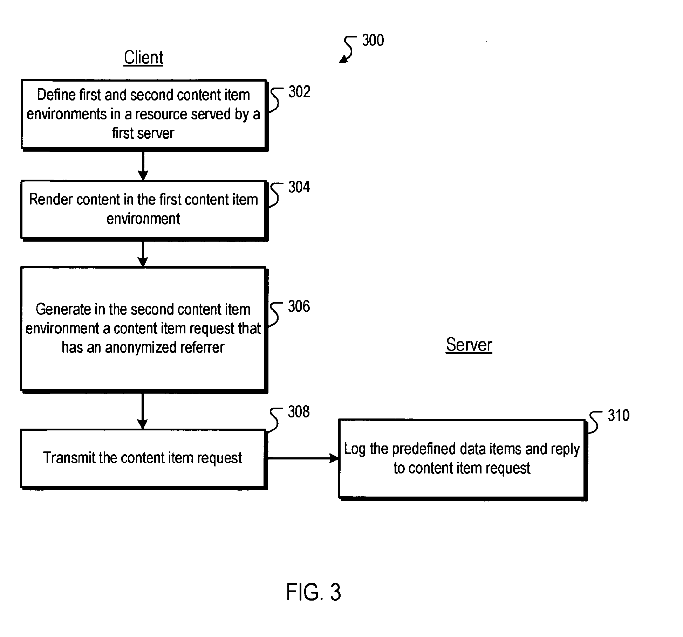

Fig. 3 is a flow diagram of an example process 300 for generating a web beacon that does not include the address of a parent resource in a referrer header. The process steps in the client device 106 are performed in response to a client device executing instructions included in a resource 105.

The client device 106 defines first and second content item environments for a resource served by a first server to the client device (302). For example, the first server is the publisher server 104. In some implementations, the first and second content item environments belonging to a first domain of the publisher server. The second content item environment is an anonymous content item environment, which is a content item environment for which a content item request has an anonymized referrer. The second content item environment may be an iFrame without a URL, or, alternatively, may be an anonymous window or tab that does not include a URL. The anonymous window or tab has null or blank URL values, and thus HTTP requests generated from these environments are also anonymized.

The client device renders content in first content item environment for display on the client device 106 (304). For example, text and images of a web page are rendered in the main browser window for display on the client device 106.

The client device 106 generates, for the second content item environment, a content item request that has an anonymized referrer (306). For example, the client device 106 generates a request to a second server, e.g., the data collection server 110, belonging to a second domain that is different from the first domain. The request is for a tracking pixel from the data collection server 110, and the request includes either null referrer data, or a blank referrer field. The request also includes one or more predefined data items, such as information specified by the publisher and information specified by the data collection service.

The client device 106 transmits the content item request (308). For example, the client device 106 transmits the request to the data collection server 110. The server, in response to receiving the request, logs the predefined data item and replies to the content item request (310).

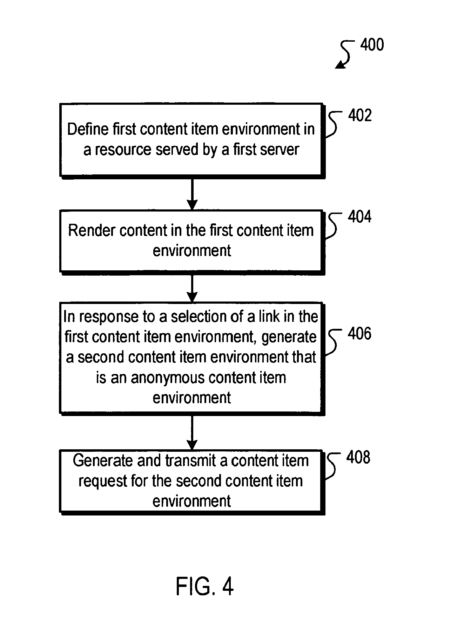

Fig. 4 is a flow diagram of an example process 400 for generating a resource request having an anonymized referrer. The process steps in the client device 106 are performed in response to a client device executing instructions included in a resource 105.

The client device 106 defines a first content item environment in a resource served by a first server (402). For example, the client device 106 may render a web page. The first content item environment may be the web page itself, or an iFrame within the web page.

The client device 106 renders content in the first content item environment (404). For example, text and images of a web page are rendered in the main browser window for display on the client device 106. The text and images may include embedded links that are each associated with a function that creates an anonymous iFrame when the link is selected.

The client device 106, in response to a selection of a link in the first content item environment, generates a second content item environment that is an anonymous content item environment (408). For example, the client device 106 generates an iFrame without setting the URL of the iFrame, or sets the URL of the iFrame to a null referrer value.

The client device 106 generates and transmits a content item request for the second content item environment (410). For example, the client device 106 associates the script that generates the request with the window handler of the iFrame. Thus the resulting request has an anonymized referrer.

As described above, the systems implementing the subject matter of this written description generate anonymous content item environment for which to send web beacons directly to data collection servers, or to anonymized general HTTP requests. The requests that are sent have anonymized referrers, i.e., the requests do not include referrer data or have null values in the referrer header. Accordingly, the technical problem of increasing latency when stripping referrer data from requests is avoided, resulting in a lower latency and better user experience.

Although the example implementations are primarily described in the context of sending a request to a second server that belongs to a domain that is different from the domain of the publisher, the content item requests can also be sent to the same sever that served the parent resource.

### Additional Implementation Details

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

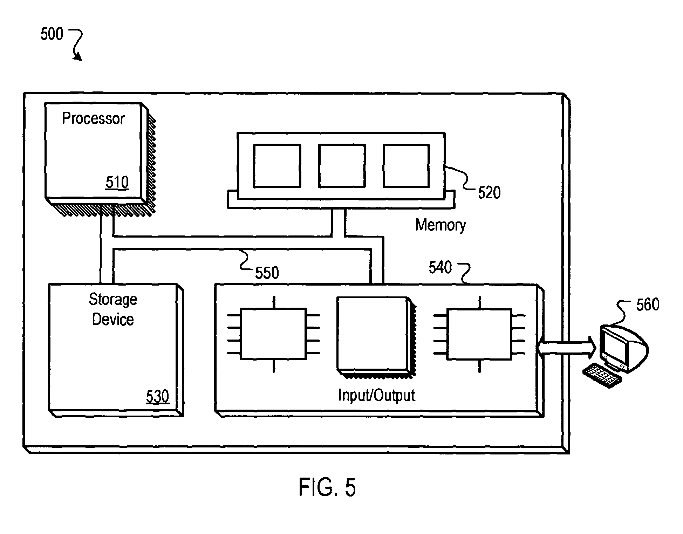

An example of one such type of computer is shown in Fig. 5, which shows a block diagram of a programmable processing system (system). The system 500 that can be utilized to implement the systems and methods described herein. The architecture of the system 500 can, for example, be used to implement a computer client, a computer server, or some other computer device.

The system 500 includes a processor 510, a memory 520, a storage device 530, and an input/output device 540. Each of the components 510, 520, 530, and 540 can, for example, be interconnected using a system bus 550. The processor 510 is capable of processing instructions for execution within the system 500. In one implementation, the processor 510 is a single-threaded processor. In another implementation, the processor 510 is a multi-threaded processor. The processor 510 is capable of processing instructions stored in the memory 520 or on the storage device 530.

The memory 520 stores information within the system 500. In one implementation, the memory 520 is a computer-readable medium. In one implementation, the memory 520 is a volatile memory unit. In another implementation, the memory 520 is a non-volatile memory unit.

The storage device 530 is capable of providing mass storage for the system 500. In one implementation, the storage device 530 is a computer-readable medium. In various different implementations, the storage device 530 can, for example, include a hard disk device, an optical disk device, or some other large capacity storage device.

The input/output device 540 provides input/output operations for the system 500. In one implementation, the input/output device 540 can include one or more of a network interface device, e.g., an Ethernet card, a serial communication device, e.g., and RS-232 port, and/or a wireless interface device, e.g., an 802.11 card. In another implementation, the input/output device can include driver devices configured to receive input data and send output data to other input/output devices, e.g., keyboard, printer and display devices 560.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method performed by a client device (106), comprising:
defining first and second content item environments (240, 242) for a resource served by a first server (104) to the client device (106), the first content item environment (240) belonging to a first domain of the first server (104), the second content item environment (242) being an anonymous content item environment that is a child of the first content item environment and that is not set to a Uniform Resource Locator, the anonymous content item environment being a content item environment for which a referrer field of a content item request indicating that a referrer for the anonymous content item environment is non-existing so that the request has an anonymized referrer;
rendering content in the first content item environment (240) for display on the client device (106);
generating for the second content item environment (242) the content item request (232), the content item request (232) being a request for a respective content item (234) and having an anonymized referrer; and
transmitting the content item request (232).

2. The method of claim 1, wherein:
the second content item environment (242) belongs to the first domain of the first server (104).

3. The method of claim 1 or 2, wherein
the content item request (232) for the respective content item (234) is a request to a second server (110) that belongs to a second domain that is different from the first domain.

4. The method of any of claims 1 to 3, wherein defining the second content item environment (242) comprises defining an iFrame that includes instructions that cause the client device (106) to generate the content item request (232).

5. The method of claim 4, wherein the iFrame is a child of the first content item environment (240) and has the same domain as the first content item environment (240).

6. The method of claim 4 or 5, wherein generating the second content item environment (242) comprises generating the iFrame with a null value for a uniform resource locator (URL) for the iFrame.

7. The method of any of claims 1 to 6, wherein the referrer field has a null value in the field for the Uniform Resource Locator.

8. The method of any of claims 3 to 7, wherein the content item request (232) includes one or more predefined data items in addition to the request for the respective content item (234), the predefined data items including first data items specified by the first server (104) and second data items specified by the second server (110).

9. The method of claim 8, wherein the second data items include cookie data of a cookie set for the second domain.

10. The method of any of claims 1 to 9, wherein generating the content item request (232) comprises generating an HTTP request with a blank HTTP referrer field.

11. A non-transitory computer storage medium encoded with instructions that when executed by a client device (106) cause the client device (106) perform operations according to any of the methods of claims 1 to 10.

12. A system, comprising:
a data processing apparatus; and
a non-transitory computer storage medium according to claim 11.

## Patentansprüche

1. Ein Verfahren, das durch eine Client-Vorrichtung (106) durchgeführt wird, wobei das Verfahren umfasst:
Definieren einer ersten und einer zweiten Inhaltselement-Umgebung (240, 242) für eine Ressource, die durch einen ersten Server (104) der Client-Vorrichtung (106) angeboten wird,
wobei die erste Inhaltselement-Umgebung (240) zu einer ersten Domain des ersten Servers (104) gehört, und
wobei die zweite Inhaltselement-Umgebung (242) eine anonyme Inhaltselement-Umgebung (242) ist, die ein Abkömmling der ersten Inhaltselement-Umgebung ist, und die nicht als ein Uniform Resource Locator eingestellt ist,
wobei die anonyme Inhaltselement-Umgebung eine Inhaltselement-Umgebung ist, für die ein Bezugsfeld einer Inhaltselement-Anfrage angibt,
dass ein Bezieher für die anonyme Inhaltselement-Umgebung nicht existent ist, so dass die Anfrage einen anonymen Bezieher hat;
Rendern von Inhalt in der ersten Inhaltselement-Umgebung (240) zur Darstellung auf einer Client-Vorrichtung (106);
Generieren der Inhaltselement-Anfrage (232) für die zweite Inhaltselement-Umgebung (242), wobei die Inhaltselement-Anfrage (232) eine Anfrage für ein entsprechendes Inhaltselement (234) ist, und wobei die Anfrage einen anonymen Bezieher hat; und
Übertragen der Inhaltselement-Anfrage (232).

2. Das Verfahren nach Anspruch 1, wobei die zweite Inhaltselement-Umgebung (242) zu der ersten Domain des ersten Servers (104) gehört.

3. Das Verfahren nach Anspruch 1 oder 2, wobei die Inhaltselement-Anfrage (232) für das entsprechende Inhaltselement (234) eine Anfrage bei einem zweiten Server (110) ist, der zu einer zweiten Domain gehört, die unterschiedlich von der ersten Domain ist.

4. Das Verfahren nach irgendeinem der Ansprüche 1 bis 3, wobei definieren der zweiten Inhaltselement-Umgebung (242) umfasst, dass ein iFrame definiert wird, der Anleitungen enthält, die bewirken, dass die Client-Vorrichtung (106) die Inhaltselement-Anfrage (232) generiert.

5. Das Verfahren nach Anspruch 4, wobei iFrame ein Abkömmling der ersten Inhaltselement-Umgebung (240) ist und dieselbe Domain wie die erste Inhaltselement-Umgebung (240) hat.

6. Das Verfahren nach Anspruch 4 oder 5, wobei generieren der zweiten Inhaltselement-Umgebung (242) umfasst, dass der iFrame mit einem Nullwert für einen Uniform Resource Locator (URL) für den iFrame generiert wird.

7. Das Verfahren nach irgendeinem der Ansprüche 1 bis 6, wobei das Bezugsfeld einen Nullwert in dem Feld für den Uniform Resource Locator hat.

8. Das Verfahren nach irgendeinem der Ansprüche 3 bis 7, wobei die Inhaltselement-Anfrage (232) ein oder mehrere vordefinierte Datenelemente zusätzlich zur Anfrage für ein entsprechendes Inhaltselement (234) enthält, wobei die vordefinierten Datenelemente erste Datenelemente, die durch den ersten Server (104) spezifiziert werden und zweite Datenelemente, die durch den zweiten Server (110) spezifiziert werden, enthalten.

9. Das Verfahren nach Anspruch 8, wobei die zweiten Datenelemente Cookie-Daten von einem Cookie-Satz für die zweite Domain enthalten.

10. Das Verfahren nach irgendeinem der Ansprüche 1 bis 9, wobei Generieren der Inhaltselement-Anfrage (232) umfasst, dass eine http-Anfrage mit einem leeren http-Bezugsfeld generiert wird.

11. Ein nicht-transitorisches Computerspeichermedium, das Anleitungen kodiert, die, wenn sie durch eine Client-Vorrichtung (106) ausgeführt werden, bewirken, dass die Client-Vorrichtung (106) Operationen gemäß irgendeinem der Verfahren nach Anspruch 1 bis 10 durchführt.

12. Ein System umfassend:
eine Vorrichtung zum Datenprozessieren; und
ein nicht-transitorisches Computerspeichermedium gemäß Anspruch 11.

## Revendications

1. Procédé mis en oeuvre par un dispositif client (106), comprenant les étapes consistant à :
définir des premier et deuxième environnements d'éléments de contenu (240, 242) pour une ressource desservie au dispositif client (106) par un premier serveur (104), le premier environnement d'éléments de contenu (240) appartenant à un premier domaine du premier serveur (104), le deuxième environnement d'éléments de contenu (242) étant un environnement d'éléments de contenu anonyme qui est un enfant du premier environnement d'éléments de contenu et qui n'est pas rattaché à un Localisateur Uniforme de Ressources, l'environnement d'éléments de contenu anonyme étant un environnement d'éléments de contenu pour lequel un champ de référenceur d'une demande d'élément de contenu indique qu'un référenceur pour l'environnement d'éléments de contenu anonyme est non existant de sorte que la demande possède un référenceur rendu anonyme ;
restituer un contenu dans le premier environnement d'éléments de contenu (240) en vue de son affichage sur le dispositif client (106) ;
générer, pour le deuxième environnement d'éléments de contenu (242), la demande d'élément de contenu (232), la demande d'élément de contenu (232) étant une demande portant sur un élément de contenu respectif (234) et possédant un référenceur rendu anonyme ; et
transmettre la demande d'élément de contenu (232).

2. Procédé selon la revendication 1, dans lequel :
le deuxième environnement d'éléments de contenu (242) appartient au premier domaine du premier serveur (104).

3. Procédé selon la revendication 1 ou 2, dans lequel :
la demande d'élément de contenu (232) portant sur l'élément de contenu respectif (234) est une demande auprès d'un deuxième serveur (110) appartenant à un deuxième domaine, différent du premier domaine.

4. Procédé selon l'une quelconque des revendications 1 à 3, dans lequel l'étape consistant à définir le deuxième environnement d'éléments de contenu (242) comprend l'étape consistant à définir un élément iFrame qui contient des instructions qui amènent le dispositif client (106) à générer la demande d'élément de contenu (232).

5. Procédé selon la revendication 4, dans lequel l'élément iFrame est un enfant du premier environnement d'éléments de contenu (240) et possède le même domaine que le premier environnement d'éléments de contenu (240).

6. Procédé selon la revendication 4 ou 5, dans lequel l'étape consistant à générer le deuxième environnement d'éléments de contenu (242) comprend l'étape consistant à générer l'élément iFrame avec une valeur nulle pour un Localisateur Uniforme de Ressources (URL) pour l'élément iFrame.

7. Procédé selon l'une quelconque des revendications 1 à 6, dans lequel le champ de référenceur possède une valeur nulle dans le champ pour le Localisateur Uniforme de Ressources.

8. Procédé selon l'une quelconque des revendications 3 à 7, dans lequel la demande d'élément de contenu (232) comprend un ou plusieurs éléments de données prédéfinis en plus de la demande portant sur l'élément de contenu respectif (234), les éléments de données prédéfinis comprenant des premiers éléments de données spécifiés par le premier serveur (104) et des deuxièmes éléments de données spécifiés par le deuxième serveur (110).

9. Procédé selon la revendication 8, dans lequel les deuxièmes éléments de données comprennent des données de cookie d'un ensemble de cookies pour le deuxième domaine.

10. Procédé selon l'une quelconque des revendications 1 à 9, dans lequel l'étape consistant à générer la demande d'élément de contenu (232) comprend l'étape consistant à générer une demande HTTP avec un champ de référenceur HTTP vide.

11. Support de stockage d'ordinateur non volatil codé par des instructions dont l'exécution par un dispositif client (106) amène celui-ci à accomplir des étapes selon l'un quelconque des procédés selon les revendications 1 à 10.

12. Système, comprenant :
un appareil de traitement de données ; et
un support de stockage d'ordinateur non volatil selon la revendication 11.
